# EUROPEAN PATENT SPECIFICATION

(11) **EP 1 430 352 B1**
(45) Date of publication and mention of the grant of the patent: **30.11.2005**
(21) Application number: 02763104.3
(22) Date of filing: 27.09.2002
(51) Int. Cl.: G02B 27/22

(54) **DEVICE AND METHOD FOR THREE-DIMENSIONAL DISPLAY OF IMAGES**
GERÄT UND VERFAHREN ZUR ANZEIGE VON DREIDIMENSIONALEN BILDERN
DISPOSITIF ET PROCEDE D'AFFICHAGE TRIDIMENSIONNEL D'IMAGES

(30) Priority: 28.09.2001 NL 1019058
(43) Date of publication of application: 23.06.2004
(73) Proprietor: Deep Screen Vision Holding B.V., 3439 NG Nieuwegein (NL)
(72) Inventor: WENGER, Klaus, Herbert, Gunter, NL-3605 HH Maarssen (NL)
(74) Representative: Hooiveld, Arjen Jan Winfried
(86) International application number: PCT/NL2002/000629
(87) International publication number: WO 2003/027755

(56) References cited:
- WO-A-01/04665
- WO-A-98/17067
- US-A- 5 083 199

## Description

The present invention relates to an image display system comprising an image display device and optical means present at least in front of the viewer, which have a relief structure comprising optical pyramid-shaped elements for suggesting depth in images being viewed by distinguishing between incident light on the left-hand eye and incident light on the right-hand eye of a viewer.

The present invention furthermore relates to an image display device suitable for use in the image display system according to the invention.

Such a system is known from WO 98/17067. The system that is disclosed therein comprises an image display device or screen which displays images which have been position-shifted in succession by image processing means. After being displayed on the screen, said images are converted by optical means disposed between the screen and the viewer. To that end, the optical means have a relief structure comprising elements of substantially pyramidic section. As a result of the presence of the pyramids of the elements, whose apexes are directed towards the screen, a distinction is produced between incident light on a viewer's left-hand eye and incident light on said viewer's right-hand eye. This imparts a suggestion of depth in the images perceived by the viewer.

In practice it has become apparent that under certain circumstances the differences in clarity between the left-hand eye and the right-hand eye that are created with the known system are not sufficient for imparting a sufficient perception of depth in the images being viewed.

Accordingly it is an object of the present invention to provide an image display system for improved display of images comprising depth information.

In order to accomplish that objective, the image display system according to the invention is characterized in that several pyramid-shaped elements are incorporated in the relief structure for each pixel of which the images are built up.

The advantage of the image display system according to the invention is the fact that the light output of the images formed by several pyramid-shaped elements has been increased. Not only does this make the obtained image clearer and easier to view, but it also appears to effect an improvement as regards the perception of depth in the images being viewed.

In addition to that it is advantageous when using said several pyramid-shaped elements that the time-consuming, previously necessary alignment of the pyramids at the position at which each pixel is displayed on the image display device is no longer critical as regards the obtained light output of the images and the desired depth effect. Thus, a significant saving as regards time and cost price in the manufacture of image display systems according to the invention is obtained.

Another advantage is the fact that only one camera is required at the recording or transmission end in order to effect the required depth perception at the receiving end. Furthermore, the perception of the suggested depth effect is not restricted to a limited area because the desired depth effect is substantially independent of the position of the viewer with respect to the image display device.

One embodiment of the image display system according to the invention is characterized in that the pyramid-shaped element are arranged in a matrix. As a result, a defined arrangement of rows and columns of successive pyramids is formed, which can easily be produced by means of a laser a technique, for example, and which can be inspected for possible faults in a simple manner, if necessary.

An embodiment of the image display system according to the invention which can be produced in a simple and quick manner is characterized in that the pyramid-shaped elements comprise four planes.

Another embodiment of the image display system according to the invention is characterized in that the pyramid-shaped elements each have a base, in which each base of the pyramids of a row takes up one position and each base of the pyramids of an adjacent row takes up a position complementary to said one position. The advantage of this position of the bases, which is different for each row, is that it leads to different perceptions by the left-hand eye and the right-hand eye of the active optical surface of one row in comparison with the other row. This contributes additionally to the difference in the clarity of perception of one eye in comparison with the other eye. As a result, the perception of depth is enhanced.

One effect which further enhances the perception of depth is the following. It is a well-known fact in physiology that if one eye receives more light than the other eye, the information relating to said greater amount of light will travel more quickly to the brains via the nerves as the amount of light being received increases. This leads to an additional difference in transit time or phase difference as regards information travelling to the brains, which additional difference in transit time is interpreted by the brains as additional depth in the image being viewed.

Another embodiment of the image display system according to the invention is characterized in that adjacent pyramid-shaped elements exhibit different distances/heights from the apex to the base of the pyramids.
By varying the height of the pyramids over the relief structure, an additional difference is obtained in that which the two eyes perceive in the left-hand part and in the right-hand part of the image, respectively. This is in particular of importance with regard to the perception of depth in moving images, in which the movement of the image is converted into an additional difference between that which is perceived by the left-hand eye and that which is perceived by the right-hand eye, as it were, so that the perception of depth is maintained.

In connection with said further embodiment it has moreover become apparent that the image manipulation technique that may be used will remain simple and easy to implement in software, using common processors.

Another specific embodiment of the invention is characterized in that the height of the pyramids increases in one direction whereas said height decreases in the opposite direction.
The consequence of this is that movement of the image in a direction comprising a horizontal component, for example, will lead to the desired difference between the amount of light perceived by the left-hand eye and the amount of light perceived by the right-hand eye. This obtains both with regard to movement from the left to the right and with regard to movement from the right to the left. In both cases it will result in the desired perception of depth.

Yet another embodiment of the image display system according to the invention is characterized in that the direction of a row of the pyramid-shaped elements forming a matrix includes an angle of about 15 degrees with the horizontal.
With this embodiment of the image display system according to the invention it becomes possible to effect a difference between the amounts of light received by the left-hand eye and the right-hand eye, respectively, also if a movement in the image comprises a vertical component. As a result, depth can be perceived also in those cases where the direction of movement comprises a vertical component. Moreover, this embodiment reduces the extent of Moiré distortion, the well-known effect that occurs when block-shaped patters are displayed on a television screen, for example, as a consequence of which moving lines are formed on the screen. The angle of 15 degrees has appeared to be an optimum angle in particular when equilateral pyramids are used and the angles of the base are 60 degrees, therefore, whilst a row begins with a base side which extends vertically.

One embodiment of the display device that is suitable for use in the image display system according to the invention is characterized in that the optical means, which have a relief structure comprising optical, pyramid-shaped elements, are in the form of a foil, a loose foil, if desired, to be applied to the display device, or in that the pyramid-shaped elements are integrated in the front plate of the display device.

Another advantageous embodiment of the image display system is according to the invention characterized in that the system comprises means for displaying an image built up of frames as well as image manipulation means, in which said image manipulation means are arranged for changing the clarity of frame pixels from the left to the right in one frame and changing the clarity of frame pixels from the right to the left in the other frame.
To the human eye, the effect achieved by means of the clarity-manipulated frames being displayed in succession is the same as the effect achieved by using neighbouring pyramids of different height. The image manipulation means, which are to be software-implemented, form an electronic alternative, as it were, for the hardware pyramids.

This embodiment presents an electronic alternative for the optical embodiment of the system, in which the height of neighbouring pyramids changes. The exchangeability between optical image processing and electronic image signal processing as regards the desired difference in light output between the left-hand eye and the right-hand eye is illustrated by this.

A further alternative embodiment of the image display system is characterized in that the system comprises means which make it possible to control the extent to which the clarity from the left to the right and vice versa changes.
In this alternative embodiment it is possible to influence the extent to which a depth effect can be perceived in the images being displayed by controlling the degree/gradient of the clarity change.

One embodiment of the image display system which is also quite suitable for perceiving depth in images being displayed is according to the invention characterized in that the system comprises a chopper circuit connected to the display means, which circuit arranges for the frame clarity for pixels from one frame and from the other frame to be turned off alternately.

An improved embodiment of the image display system which is suitable for displaying stationary images is according to the invention further characterized in that said chopper circuit delivers a signal at a frequency which exhibits a frequency sweep.

One embodiment of the image display device which is suitable for use in the image display system is according to the invention characterized in that the optical means having a relief structure comprising optical pyramid-shaped elements consist of a foil to be arranged on the display device or are integrated in the front plate of the display device.
Given the fact that, in view of the above explanation, the position of the pyramids on the pixels is no longer critical, said foil may be an easily detachable foil; when such a foil is not used, the well-known image on the display device is shown, whereas images imparting a perception of depth are shown when a foil which is easy to apply to the image display device is used.

The image display system according to the present invention will now be explained in more detail with reference to the appended drawing. In the drawing:
- Figure 1 shows part of the relief structure comprising optical pyramid-shaped elements for use in the image display system according to the invention;
- Figures 2A, 2B and 2C are diagrams and a representation of a pyramid, respectively, which function to explain the system of Figure 1.

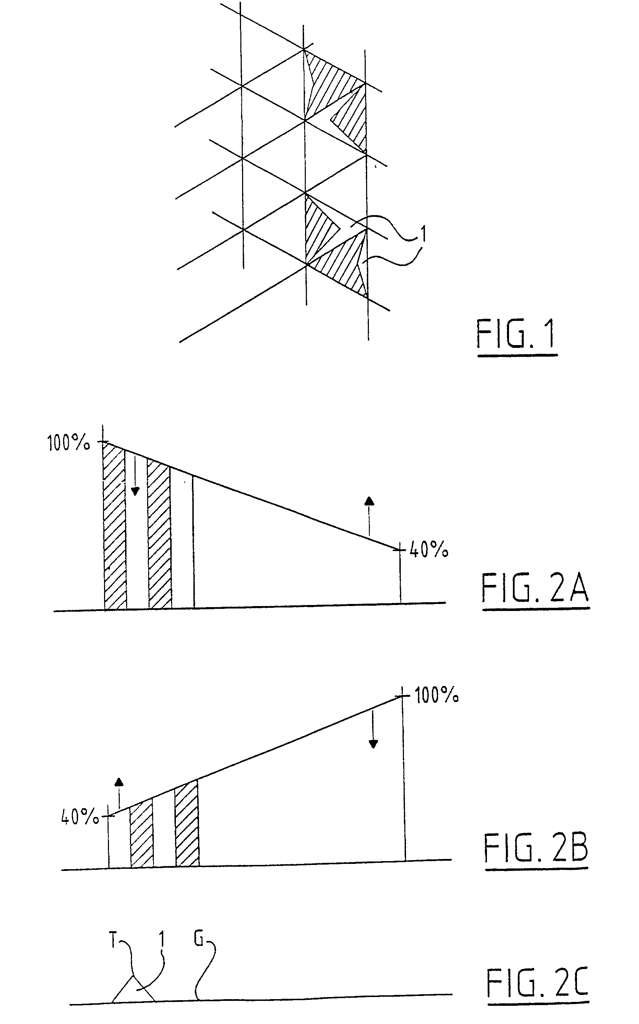

Figure 1 shows part of the relief structure which may be present on, for example, a secondary screen or on a display device, hereinafter called a screen, or be integrated therein. The relief structure may also be present on a foil, which may be detachable from the screen, if desired, or on a front plate of such a screen. Examples of a display device are: a screen or monitor, for example for a television, whether or not provided with a cathode ray tube, an LCD screen or the like. The relief structure is made up of optical means in the form of optical, pyramid-shaped elements 1 present in front of the viewer, which have been formed in the foil by means of a fine laser technique, for example. The pyramids have a apex T directed away from a viewer who is looking at the screen. Upon exposure of the screen by a passing luminous spot, the pyramids 1, which are arranged in a matrix formation in Figure 1, are exposed in succession on the side of their apexes, which light is refracted by the surfaces of the pyramids 1. In their simplest form, the pyramids 1 of the illustrated pyramid-shaped elements comprise four planes, including a base facing towards the viewer. The luminous spot forms a pixel on a picture line in a manner which is known per se, and several such lines form an image. In those cases in which an image consists of two "interlaced" frames or fields, the frames are written to the screen as half-images. A pixel is made up of two pixels in that case, one from a so-called uneven frame and one from an even frame. The precise alignment of the various pixels on the relief comprising pyramids 1, in a manner in which the left-hand eye and the right-hand eye receive different amounts of light from the pixels, so that the viewer can perceive depth in the image on the screen, is problematic. The way in which depth can be suggested in this way is schematically indicated in Figure 1, in which the hatched parts in the upper two pyramids 1 indicate the amount of light which the left-hand eye, given the position of the pyramids on the left-hand side, receives from the relief structure, whilst the hatched parts in the lower two pyramids 1 indicate the amount of light which the right-hand eye receives from the relief structure from the same left-hand side. The differences in light or clarity with which the two eyes have to cope and the associated differences between the time of arrival of said clarity information at the brains and the time of interpretation thereof impart the perception of depth in the image being viewed.

Inaccurate alignment of the relief on the pixels will lead to a poor perception of depth, however, and to the well-known Moiré distortion in the image being viewed. The two problems can be solved at once by incorporating several pyramid-shaped elements 1 in the relief structure for each pixel of which the images are built up. In this connection it may be considered to use a number of pyramids which ranges between 3 x 3 pyramids and (preferably) 9 x 9 or more pyramids per pixel, for example. Suitable techniques for realising the pyramids include: a laser technique, x-ray lithography, an I beam technique, or the mechanical super high precision diamond cutting, which currently is capable of realising up to 0.2 µm.

As Figure 1 furthermore shows, each base of the pyramid-shaped elements of the same - first - row extending to the right-hand bottom corner or to the right-hand upper corner takes up one position, in which the right hand tip of the base points to the right in all cases. Likewise, each base of an adjacent - second - row extending to the right hand bottom corner or to the right-hand upper corner takes up a position complementary to said one position, in which the left-hand tip of the base points to the left. In this way a honeycomb structure of bases is formed, as it were, which leads to the differences in clarity on which the perception of depth is based.

If a perception of depth is to be maintained in the case of moving images on the screen as well, the movement must be converted into differences in clarity between the left-hand eye and the right hand eye, as it were, in order to create the perception of depth in this manner. This idea is embodied in a possible embodiment in which the successive pyramids 1 exhibit different distances/heights, measured from the apex T to the base G of the pyramids. In particular, the height of the pyramids 1 increases from the left to the right in Figure 1, for example, whilst the height of the adjacent row of pyramids 1 decreases from the right to left. The gradual difference in height increases from 0 to 10 µm, for example, for one row of pyramids and decreases from 10 to 0 µm for the adjacent row. If, for example, a vertical line portion of the image shifts in horizontal direction in that case, the differences in clarity resulting from the differences in height of the pyramids 1 will impart a perception of depth.

In order to achieve differences in clarity and perception of depth also in the case of the direction of movement comprising a vertical component, the relief structure as shown in Figure 1 is turned. In practice the optimum angle of turning is connected with the magnitude of the angles forming the base G of the pyramids 1. For the equilateral base comprising angles of 60 degrees, the direction of the row of the pyramid-shaped elements forming a matrix must extend at an angle of about 15 degrees to the horizontal, so that also vertical movements will impart perception of depth and the Moiré effect will be further suppressed. Thus, also movement of an object in the image from the rear to the front or vice versa can still be perceived as a realistic movement towards or away from the viewer.

Image displays systems which are known per se, such as television systems, are arranged for displaying images which, as mentioned above, are built up of even and uneven frames. Furthermore, the system may be fitted with image manipulation means which are arranged for changing the clarity of frame pixels from the left to the right in one frame and which are likewise arranged for changing the clarity of frame pixels from the right to the left in the other frame. It will be understood that it is possible to adjust the degree of depth to be displayed by influencing the gradients of the clarity lines of Figures 2A and 2B, which is indicated by means of arrows. In practice the image displays system will comprise similar means for controlling the degree in which the clarity changes from the left to the right and vice versa. Reversal of the gradients of the clarity lines even makes it possible to display the image slightly in front of the screen, in which it seems as if the objects being shown emerge in part from the screen.

So far, it was movement in the image which led to a perception of depth. In order to further improve the perception of depth in the case of moving images, said perception can also be suggested by electronic means. This is done by incorporating a chopper circuit, which is connected to the display means, in the image display system, which chopper circuit arranges for the frame clarity for pixels from one frame and from the other frame being turned off alternately. This is shown more clearly in Figures 2A, 2B and 2C. In this case it obtains for the uneven frame that pixels present on the left on an uneven line will be displayed darker than pixels present on the right on the uneven line (see Figure 2A). Conversely it obtains that pixels present on the right on the even lines will be displayed darker than pixels present on the left on the even lines (see Figure 2B). This aspect makes it possible to contribute electronically rather than optically to the perception of depth, and also in this case a time difference is created between the reception of light by the left-hand eye and the right-hand eye. Figure 2C schematically shows how a matrix of pyramids 1 initially only receives light from the pixel of the even frame which, after refraction, is supplied to one of the eyes. Shortly afterwards, the other eye receives the pixel from the uneven frame. The corresponding pixels have a different light intensity for the left-hand eye and the right-hand eye, however, thus enhancing the suggestion of depth perception in the images being displayed.

In the case of computer monitors, for example, the chopper frequency may be 10 MHz, depending on the number of pixels of the image. In particular in the case of stationary images, the perception of depth can be enhanced by having the chopper output signal exhibit a frequency sweep, which may be around 1 MHz in that case. The chopper signal having a varying frequency will produce an additional change in clarity in that case, which in turn will lead to an additional depth effect, in particular for stationary images.

The foregoing obtains both for "interlaced" image display, in which even and uneven frames are displayed in succession, and for "non-interlaced" image display. In the latter case the succession of frames is a succession of full frames rather than a succession of even and uneven frames, as was the case in the preceding explanation. The image display system can also be used on monitors and on game computers.

## Claims

1. An image display system comprising an image display device and optical means present at least in front of the viewer, which have a relief structure comprising optical pyramid-shaped elements (1) for suggesting depth in images being viewed by distinguishing between incident light on the left-hand eye and incident light on the right-hand eye of a viewer, **characterized in that** several pyramid-shaped elements (1) are incorporated in the relief structure for each pixel of which the images are built up.

2. An image display system according to claim 1, **characterized in that** the pyramid-shaped element are arranged in a matrix.

3. An image display system according to claim 1 or 2, **characterized in that** the pyramid-shaped elements comprise four planes.

4. An image display system according to any one of the claims 1 - 3, **characterized in that** the pyramid-shaped elements each have a base, in which each base of the pyramids of a row takes up one position and each base of the pyramids of an adjacent row takes up a position complementary to said one position.

5. An image display system according to any one of the claims 1 - 4, **characterized in that** adjacent pyramid-shaped elements exhibit different distances/heights from the apex to the base of the pyramids.

6. An image display system according to claim 5, **characterized in that** the height of the pyramids increases in one direction whereas said height decreases in the opposite direction.

7. An image display system according to any one of the claims 1 - 6, **characterized in that** the direction of a row of the pyramid-shaped elements forming a matrix includes an angle of about 15 degrees with the horizontal.

8. An image display system according to any one of the claims 1 - 7, **characterized in that** the system comprises means for displaying an image built up of frames as well as image manipulation means, in which said image manipulation means are arranged for changing the clarity of frame pixels from the left to the right in one frame and changing the clarity of frame pixels from the right to the left in the other frame.

9. An image display system according to claim 8, **characterized in that** the system comprises means which make it possible to control the extent to which the clarity from the left to the right and vice versa changes.

10. An image display system according to claim 8 or 9, **characterized in that** the system comprises a chopper circuit connected to the display means, which circuit arranges for the frame clarity for pixels from one frame and from the other frame to be turned off alternately.

11. An image display system according to claim 10, **characterized in that** said chopper circuit delivers a signal at a frequency which exhibits a frequency sweep.

12. An image display device suitable for use in the image display system according to any one of the claims 1 - 11, **characterized in that** the optical means, which have a relief structure comprising optical, pyramid-shaped elements are in the form of a foil to be applied to the display device, or **in that** said optical means are integrated in the front plate of the display device.

## Patentansprüche

1. Ein Bilddisplaysystem mit einer Bilddisplayeinrichtung und wenigstens vor dem Betrachter angeordneten optischen Mitteln, die eine reliefartige Struktur mit optischen pyramidenförmigen Elementen (1) zum Suggerieren von Tiefe der betrachteten Bilder durch Unterscheiden zwischen in das linke Auge und in das rechte Auge des Betrachters einfallendem Licht, **dadurch gekennzeichnet, dass** in der reliefartigen Struktur jeden Bildpunkts, aus dem die Bilder aufgebaut sind, mehrere pyramidenförmige Elemente (1) enthalten sind.

2. Ein Bilddisplaysystem nach Anspruch 1, **dadurch gekennzeichnet, dass** die pyramidenförmigen Elemente in einer Matrix angeordnet sind.

3. Ein Bilddisplaysystem nach Anspruch 1 oder 2, **dadurch gekennzeichnet, dass** die pyramidenförmigen Elemente vier Ebenen aufweisen.

4. Ein Bilddisplaysystem nach einem der Ansprüche 1 - 3, **dadurch gekennzeichnet, dass** die pyramidenförmigen Elemente einen Basis haben

5. Ein Bilddisplaysystem nach einem der Ansprüche 1 - 4, **dadurch gekennzeichnet, dass** einander benachbarte pyramidenförmige Elemente unterschiedliche Abstände/Höhen von der Spitze zu der Basis der Pyramide haben.

6. Ein Bilddisplaysystem nach Anspruch 5, **dadurch gekennzeichnet, dass** die Höhe der Pyramide in einer Richtung zunimmt, während sie in der entgegengesetzten Richtung abnimmt.

7. Ein Bilddisplaysystem nach einem der Ansprüche 1 - 6, **dadurch gekennzeichnet, dass** die Richtung einer Reihe von eine Matrix bildenden pyramidenförmigen Elementen einen Winkel von etwa 15 Grad zur Horizontalen einnimmt.

8. Ein Bilddisplaysystem nach einem der Ansprüche 1 - 7, **dadurch gekennzeichnet, dass** das System Mittel zum Wiedergeben eines aus Vollbildern aufgebauten Bildes und Mittel zur Bildmanipulation, die zum Ändern der Klarheit in einem Vollbild von links nach rechts und in dem anderen Vollbild von rechts nach links aufweist.

9. Ein Bilddisplaysystem nach Anspruch 8, **dadurch gekennzeichnet, dass** das System Mittel aufweist, die es ermöglichen, das Ausmaß, in dem sich die Klarheit von links nach rechts und umgekehrt ändert, zu steuern.

10. Ein Bilddisplaysystem nach einem der Ansprüche 8 oder 9, **dadurch gekennzeichnet, dass** das System einen mit dem Displaymittel verbundenen Chopperkreis aufweist, wobei der Chopperkreis das alternative Ausschalten der Vollbildklarheit der Pixel von dem einem zu dem anderen Vollbild bewirkt.

11. Ein Bilddisplaysystem nach Anspruch 10, **dadurch gekennzeichnet, dass** der Chopperkreis ein Signal mit einer Frequenz liefert, die einen Frequenzdurchlauf darstellt.

12. Eine Bilddisplayeinrichtung, die zur Verwendung in dem Bilddisplaysystem nach einem der Ansprüche 1 - 11 geeignet ist, **dadurch gekennzeichnet, dass** die optischen Mittel, die die reliefartige Struktur haben, in der Form einer auf die Displayeinrichtung aufzubringenden Folie sind oder dass die optischen Mittel in die Frontplatte der Displayeinrichtung integriert sind.

## Revendications

1. Système d'affichage d'images, comprenant un dispositif d'affichage d'images et un dispositif optique présents au moins devant l'observateur, qui possède une structure en relief comprenant des éléments optiques en forme de pyramides (1) destinés à suggérer la profondeur dans les images observées par distinction entre la lumière incidente sur l'oeil gauche et la lumière incidente sur l'oeil droit de l'observateur, **caractérisé en ce que** plusieurs éléments en forme de pyramides (1) sont incorporés dans la structure en relief pour chaque élément d'image dont les images sont constituées.

2. Système d'affichage d'images selon la revendication 1, **caractérisé en ce que** les éléments en forme de pyramides sont disposés suivant une matrice.

3. Système d'affichage d'images selon la revendication 1 ou 2, **caractérisé en ce que** les éléments en forme de matrice comprennent quatre plans.

4. Système d'affichage d'images selon l'une quelconque des revendications 1 à 3, **caractérisé en ce que** les éléments en forme de pyramides ont chacun une base, et dans lequel chaque base des pyramides d'une rangée prend une première position et chaque base des pyramides d'une rangée adjacente prend une position complémentaire de la première position.

5. Système d'affichage d'images selon l'une quelconque des revendications 1 à 4, **caractérisé en ce que** les éléments adjacents en forme de pyramides présentent des distances-hauteurs différentes du sommet à la base des pyramides.

6. Système d'affichage d'images selon la revendication 5, **caractérisé en ce que** la hauteur des pyramides augmente dans une direction alors que la hauteur diminue en direction opposée.

7. Système d'affichage d'images selon l'une quelconque des revendications 1 à 6, **caractérisé en ce que** la direction d'une rangée d'éléments en forme de pyramides formant une matrice inclut un angle d'environ 15 avec l'horizontale.

8. Système d'affichage d'images selon l'une quelconque des revendications 1 à 7, **caractérisé en ce que** le système comporte un dispositif d'affichage d'une image construite avec des trames ainsi qu'un dispositif de manipulation d'image, dans lequel le dispositif de manipulation d'image est disposé afin qu'il change la clarté des éléments d'image de trame de gauche à droite dans une trame et qu'il change la clarté des éléments d'image d'une trame de droite à gauche dans l'autre trame.

9. Système d'affichage d'images selon la revendication 8, **caractérisé en ce que** le système comprend un dispositif qui rend possible le réglage de l'amplitude du changement de la clarté de gauche à droite ou inversement.

10. Système d'affichage d'images selon la revendication 8 ou 9, **caractérisé en ce que** le système comprend un circuit de découpage connecté au dispositif d'affichage et ce circuit assure l'arrêt alternatif de la clarté des éléments d'image de trame pour une trame et pour l'autre trame.

11. Système d'affichage d'images selon la revendication 10, **caractérisé en ce que** le circuit de découpage transmet un signal à une fréquence qui présente un balayage en fréquence.

12. Dispositif d'affichage d'images destiné à être utilisé dans le système d'affichage d'images selon l'une quelconque des revendications 1 à 11, **caractérisé en ce que** le dispositif optique, qui a une structure en relief comprenant des éléments optiques en forme de pyramides, est sous forme d'une feuille destinée à être appliquée au dispositif d'affichage, ou **en ce que** le dispositif optique est intégré à la plaque avant du dispositif d'affichage.
